# EUROPEAN PATENT APPLICATION

(11) **EP 4 738 171 A1**
(43) Date of publication of application: **06.05.2026**
(21) Application number: 24210277.0
(22) Date of filing: 31.10.2024
(51) Int. Cl.: G06F 21/64, H04L 9/00, H04L 9/40

(54) **DECENTRALIZED IDENTITY MANAGEMENT**

(71) Applicant: Aptiv Technologies AG, 8200 Schaffhausen (CH)
(72) Inventor: Steinacker, Domenic, 53819 Neunkirchen-Seelscheid (DE); Zulauf, Robert, 47807 Krefeld (DE)
(74) Representative: Lewis Silkin LLP

(57) **Abstract**

A decentralized identity management system is provided which stores identification information for a network, and configuration history information, across a distributed ledger across a plurality of electronic control units of the network. Each change to the network is recorded in a sequence of records held on the distributed ledger.

## Description

### Field

The present disclosure relates to an identity management system for a network of electronic control units (ECUs). Particularly, but not exclusively, the present disclosure relates to an identity management system for a vehicle. The present disclosure concerns building and maintaining an identity using a decentralized management system based on use of a distributed ledger.

### Background

Identity management solutions typically rely on centralized approaches, where identity and configuration information is managed by external infrastructure. This centralized approach presents several challenges and limitations.

One significant problem is the requirement for regular secure communication between a network whose identity is managed, and the external infrastructure. This dependency can lead to reduced reliability and potential security vulnerabilities. Threats may emerge in either direction, depending on whether the network or the external infrastructure becomes unavailable or compromised.

Conventional solutions also face challenges in efficiently handling frequent updates and changes to the configuration of a system, such as functionality changes or software updates, or the addition or removal of ECUs. These changes often require time-consuming and potentially insecure interactions with external systems in order for configuration information to be recorded accurately. At times, the external systems may be unavailable, either deliberately, or unintentionally. In some cases, some changes, such as ECU replacements or repairs may not be documented as a consequence.

In implementations in which the external infrastructure is a single control unit, or even implementations in which such a single control unit is part of the network whose identity is to be managed, there is a reliance on the authority of a single node in the network to govern the entire network, which can present operational and security risks. For example, if a central authority is damaged or is maliciously altered or replaced, the entire network can be compromised.

As such, there is a growing need for a more flexible and robust approach to managing identification information to provide a trusted execution environment for different types of services that depend on the identification information. Embodiments of the present disclosure aim to address this need by introducing a decentralized identity management system based on distributed ledger technology.

### Summary

According to a first aspect, there is provided an identity management system, comprising: a network of a plurality of electronic control units, ECUs, wherein each ECU is a node of a distributed ledger for sharing identification information; wherein each of the ECUs is configured to store a sequence of records defining network identification information, in which a genesis record of the sequence comprises the network identity, and each record subsequent to the genesis record defines a change to a configuration of the network recorded by the network, and a link to the previous record in the sequence, wherein the identity management system is arranged to obtain the identity and a configuration history of the network from the latest record in the sequence held by any one of the plurality of ECUs of the distributed ledger and to perform one or more operations in accordance with the obtained network identity and/or configuration history.

By utilizing a distributed ledger across multiple ECUs, the system eliminates single points of failure and reduces dependency on external infrastructure. This enhances overall reliability and resilience of the network. Further, the network identity is based on all ECU identities, such that changes to any ECU or its configuration are reflected in the network identity, while recording a history of configuration changes ensures that a current network identity can be determined to be authentic.

In embodiments, each record of the sequence of records is a block of a blockchain, in which each block comprises a cryptographic hash of a previous block in the blockchain. In this manner, data integrity and immutability are ensured, facilitating verification of the entire configuration history, and recording every configuration change.

In embodiments, a group of the plurality of ECUs is an authorisation council comprising a plurality of authorisation nodes, wherein the authorisation council is configured to: maintain the blockchain; validate one or more ECUs; and authorise network configuration changes, according to a majority voting scheme amongst the plurality of authorisation nodes.

In this manner, unauthorised network changes can be prevented, and identity management can be sustained by democratic self-governance by the ECUs in the network.

In embodiments, the network configuration changes comprise: adding an ECU to the network; removing an ECU from the network; recording a change in functionality of an ECU; and recording a software or firmware change of an ECU. In this manner, accurate and up-to-date records of the network configuration are maintained, and events such as repairs or replacements can be recorded, with replaced components being authorised.

In embodiments, the authorisation nodes comprise ECUs having a functionality greater than a threshold level of functionality. In this manner, resource utilization within the network is optimised by ensuring that critical blockchain maintenance activities are handled by ECUs having sufficient capability to do so without affecting other operations.

In embodiments, the network is arranged to receive a record of genesis transactions from a provisioning authority, wherein an ECU is arranged to determine that it is an authorisation node if it is part of the genesis transactions received from the provisioning authority, wherein each ECU that is determined to be an authorisation node is arranged to create a genesis block of the blockchain, comprising a genesis identity of the network and the genesis transactions received from the provisioning authority; wherein if respective genesis blocks created by each and every authorisation node are the same, the genesis block is validated such that the blockchain is initiated with the genesis block, and a secure channel is established between each pair of authorisation nodes using information from the genesis transactions.

In this manner, a secure initialization process is provided to establish a trusted foundation for the network, but which is the only instance in which the involvement of a provisioning authority is required. Once the blockchain is established, it is maintained by the authorisation council in a decentralized manner.

In embodiments, a requesting ECU is arranged to broadcast a request to join the distributed ledger if it does not store a valid block of the blockchain, wherein the request comprises identification information for the requesting ECU, wherein: if the authorisation council validates the requesting ECU, the requesting ECU is arranged to receive the blockchain from the authorisation council, and the authorisation council is arranged to update the blockchain with a block comprising a transaction representing a network configuration change comprising the addition of the identification information of the requesting ECU, across the distributed ledger.

In embodiments, the request comprises one or more of: an identification number, a serial number, a network address, a digital product passport, a software version, an authentication certificate, a token, and a public key. In this manner, detailed tracking and management of the network's identity is enabled.

In embodiments, the one or more operations comprise managing access to one or more services in dependence upon network identity and/or configuration history. In this manner, dynamic and flexible control of ECU capabilities is enabled.

In embodiments, the one or more operations comprise one or more of: disabling or requesting a reboot of one or more ECUs; and triggering a notification. In this manner, rapid responses to security threats can be ensured, while compromised or malfunctioning ECUs can be detected.

In embodiments, the one or more operations comprise remote attestation from each ECU to each other ECU, and disabling or requesting a reboot of an ECU, or triggering a notification if the remote attestation fails. In this manner, continuous verification of system integrity is enabled.

In embodiments, the network comprises ECUs of a vehicle control system, and the network information comprises vehicle identity information, wherein the one or more operations include: managing access to a service in accordance with a subscription associated with the vehicle identity information; disabling one or more ECUs in accordance with a subscription associated with the vehicle identity information, or a software or firmware version; and sharing vehicle identity information and/or configuration information with an external entity.

According to a second aspect, there is provided a method of managing identification information, comprising an electronic control unit, ECU, performing the steps of: receiving a record of genesis transactions from a provisioning authority, acquiring authorisation node status in a network of ECUs if the ECU is part of the genesis transactions received from the provisioning authority, responsive to the ECU determining that it is an authorisation node, creating a block of the blockchain, comprising a genesis identity of the network and the genesis transactions received from the provisioning authority; responsive to the ECU determining that the block and each respective block created by each and every other authorisation node in the network of ECUs are the same, storing a blockchain initiated with the block as a genesis block, and establishing a respective secure channel with each of the other authorisation nodes using the genesis transactions; wherein the ECU is comprised within a distributed ledger storing network identification information and configuration history information for use in one or more operations by an identification management system.

According to a third aspect, there is provided a computer program which, when executed by the ECU, is arranged to perform the method of the second aspect.

### Brief Description of Drawings

Illustrative embodiments will now be described with reference to the drawings in which:
Figure 1 shows an identity management system according to a embodiments of the present disclosure; and
Figure 2 illustrates a method of establishing and maintaining an identity management system according to embodiments of the present disclosure.

### Detailed Description

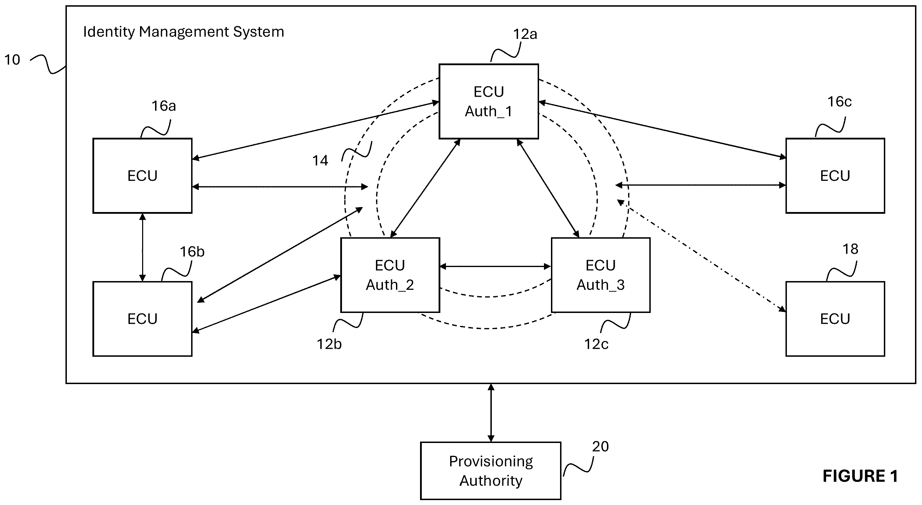

Embodiments of the present disclosure are described with reference to Figure 1, which shows an identity management system 10. For simplicity of disclosure, Figure 1 is described in the context of an identity management system for a vehicle, in which the identity of the vehicle and its configuration information are managed by the identity management system 10.

The identity management system 10 comprises a plurality of ECUs 12a-c, 16a-c arranged in a network. The numbers of ECUs which are illustrated simply represent example implementations to simplify the disclosure. In embodiments, the network represents an automotive control architecture, in which a variety of ECUs are present to serve particular functions, such as ECUs for power systems sensors, lights, air conditioning, autonomous driving, and zonal gateways for particular zones of ECUs, as known in the art. By way of example, ECU 12a is connected to both ECU 16a and 16c. ECU 12b is connected to ECU 16b. ECUs 12a, 12b and 12c are connected to each other.

Each ECU 12a-c, 16a-c is associated with a particular ECU identity. This may include an identification number, serial number, a network address such as an IP address or MAC address, an encryption key such as a public key, an authentication certificate, a software or firmware version implemented by the ECU, and a digital product passport. The digital product passport comprises a package of information relating to the ECU such as its manufacture or installation date, power consumption and environmental impact information, product type, and so on.

The identity of the network as a whole is characterised by a combination of elements defining the network identification information, each corresponding to identification information for a single ECU. It is this network identification information which is managed by the identity management system 10. In the context of a vehicle, the identification information can be very specific, with detailed and customizable definitions of particular functional components, such that the configuration of a vehicle can be readily compared with its configuration at manufacture to verify whether particular configuration changes are valid and in keeping with particular requirements and expectations.

Based on the determination of the vehicle identity, decisions can be made as to whether to permit access to particular services, in conjunction with a particular subscription level associated with the vehicle. The services may be associated with particular ECUs, such as a controller for a navigation system, or infotainment system, which may be authorised if the navigation or infotainment system ECUs have a particular identity. In this manner, the level of dynamic control of the vehicle which is made possible is significantly greater than that which can be achieved with only a vehicle identity number (VIN), as used in conventional systems.

The principle of operation of embodiment of the present disclosure is based on the configuration of the network of ECUs as a distributed ledger, in which each ECU stores identification for the entire network. Such a decentralised system enables significant advantages. By holding network configuration information at a plurality of ECUs, errors or failures of individual ECUs do not cause any loss of identification information. In a conventional system in which identification information is held only by a central controller, any malfunction at the central controller could cause a loss of identification information for the entire network. In the present disclosure, the ECUs of the network are referred to as 'nodes'.

The distributed ledger stores a sequence of records, in which each record in the sequence links to, and is time-correlated with, a previous record in the sequence. In this manner, a sequence of records can be built up, with each record documenting a particular change to the network configuration, such as an addition or replacement of a particular ECU or an ownership or subscription level change. By documenting configuration changes, as well as the network identity, it is possible to hold an entire historical record of the configuration of the network, so that the circumstances of a particular network configuration change can be identified, in terms of what was changed and when. Assessment of the evolution of the network configuration over time can thus provide significant diagnostic information, such as a service or repair history for a vehicle. Particularly in the event of a vehicle collision, in which one or more ECUs may be located in a region of a vehicle which has experienced a damaging impact, no loss of configuration information arises if the damaged ECUs require replacement.

In some embodiments, each record in the sequence of records may make use of data-associated encryption of the most recent record prior to the instant in the sequence. Data integrity and immutability may be ensured by implementing the sequence of records as a blockchain, in which each block in the chain is linked to a previous block via a cryptographic hash. Blocks are only ever added to the chain, and are not deleted, and so each stage of the evolution of the configuration of the network is recorded permanently via each block in the chain, without the possibility that any record can be changed. This provides security against fraudulent activity such as an attempt to erase particular configuration information from the network in order to be able to introduce unauthorised ECUs into the network - this is not possible as it is not possible to erase the configuration history.

Each block in the blockchain stores identification information, certificates and other metadata which characterises the ECUs of the network.

For convenience of description, the embodiments are described in the context of a blockchain, but it will be appreciated that it is not necessary to implement the sequence of records as a blockchain, and in other embodiments, the records in the sequence need not be linked in an encrypted manner.

In embodiments, the blockchain is maintained by a group of ECUs 12a-c referred to herein as authorisation nodes of the network. Together, the authorisation nodes form an authorisation council, which is represented abstractly in Figure 1 via a connection ring 14. In practice, the authorisation council 14 is implemented via trusted end-to-end secure connections between a first authorisation node Auth 1 12a and a second authorisation node Auth 2 12b, between Auth_2 12b and a third authorisation node Auth_3 12c, and between Auth_3 and Auth_1. Each of the ECUs 12a-c of the authorisation council 14 performs its own dedicated functions in the context of the operation of the vehicle, but in the context of the identity management system 10, each of the ECUs 12a-c of the authorisation council 14 shares blocks of the blockchain and shares authorisation functions.

The access to the shared authorisation functions by other ECUs 16a-c which are not authorisation nodes is such that connections between the authorisation council 14 and such non-authorisation nodes 16a-c are illustrated via arrows between the non-authorisation nodes 16a-c and the ring 14. A physical or wireless connection may also exist an ECU of the authorisation council 14 and an ECU outside the authorisation council 14, such as the connection between ECU 16a and Auth_1, the connection between ECU 16b and Auth_2, and the connection between ECU 16c and Auth_1. Some of the non-authorisation nodes may also be connected to each other, such as the connection between ECU 16a and 16b.

Maintenance of the blockchain comprises authorising the addition of a new block to the chain, and communicating the newly added block across the distributed ledger within the authorisation council 14, and to the ECUs 16a-c outside of the authorisation council 14. The authorisation process is described below, and comprises validating an ECU and authorising network configuration changes, such as addition or removal of an ECU, a change in a software or firmware version (for example, an upgrade or downgrade), or a change in functionality of an ECU.

Of the ECUs in the network, the authorisation nodes 12a-c are ECUs which meet a minimum capability or functionality threshold. In an automotive context, authorisation nodes may have a functional capacity such that their functions as automotive controllers are not affected by their additional responsibilities for the blockchain of the decentralised identity management system 10. One example of an authorisation node may be a central controller for the vehicle. There is no specification of a required functionality for the non-authorisation nodes 16a-c. Generally, non-authorisation nodes 16a-c may have a lower or lighter capability than the authorisation nodes 12a-c, such as controllers of sensor systems in the vehicle, but this is not essential, and in some embodiments, one or more of the non-authorisation nodes 16a-c may have greater or fuller capability than the authorisation nodes 12a-c. In other embodiments, authorisation nodes 12a-c may be selected based on power consumption levels or environmental performance, so as to ensure that management of the blockchain does not consume excessive energy levels or generate excessive heat.

ECUs in the network may be further distinguished by the amount of information that they store. For example, 'full nodes', which include, but are not limited to, authorisation nodes 12a-c, store the complete blockchain. 'Light nodes' may store only the most recent blocks of the blockchain where, for example, they do not have the storage capacity to store the complete blockchain.

A decision as to which of the ECUs in the network is an authorisation node is made by a provisioning authority 20. The provisioning authority 20 is external, with respect to the identity management system 10, and may be a computer system or server, or may be a user interface to human input. The provisioning authority 20 is used to configure the network at the initiation of the blockchain, such as at the point of manufacture of a vehicle, in a secure environment. This may be the only point at which communication between the identity management system 10 and the provisioning authority takes place 20, although in embodiments, the identity management system 10 may periodically issue status reports to the provisioning authority 20. In this manner, security is preserved through minimising external communication, and maintenance of network configuration information on the network itself, via the distributed ledger.

The provisioning authority 20 configures an initial mapping between a vehicle and its identity by defining the identity of the ECUs which are to act as authorisation nodes. This definition may be achieved during manufacture based on acquiring identification information for each of the ECUs installed in the vehicle, and performing a decision-making process based on, for example, capabilities of the ECUs, in order to select an optimum authorisation council 14.

In embodiments, the authorisation council 14 comprises an odd number of authorisation nodes 12a-c to enable a majority voting scheme to be implemented, in which the authorisation council 14 takes a particular collective decision, such as approval of a blockchain update and admission of an ECU to the identity management system 10, if the majority of authorisation nodes are in agreement with that decision. Although a majority voting system can be implemented in some circumstances with an even number of nodes, difficulties arise when equal numbers of nodes take opposite decisions. The minimum number of authorisation nodes of embodiments of the present disclosure is therefore three, to ensure that there cannot be a tie in the voting, and to avoid the challenges associated with conventional systems which use a centralised identity management approach of a single authorisation node.

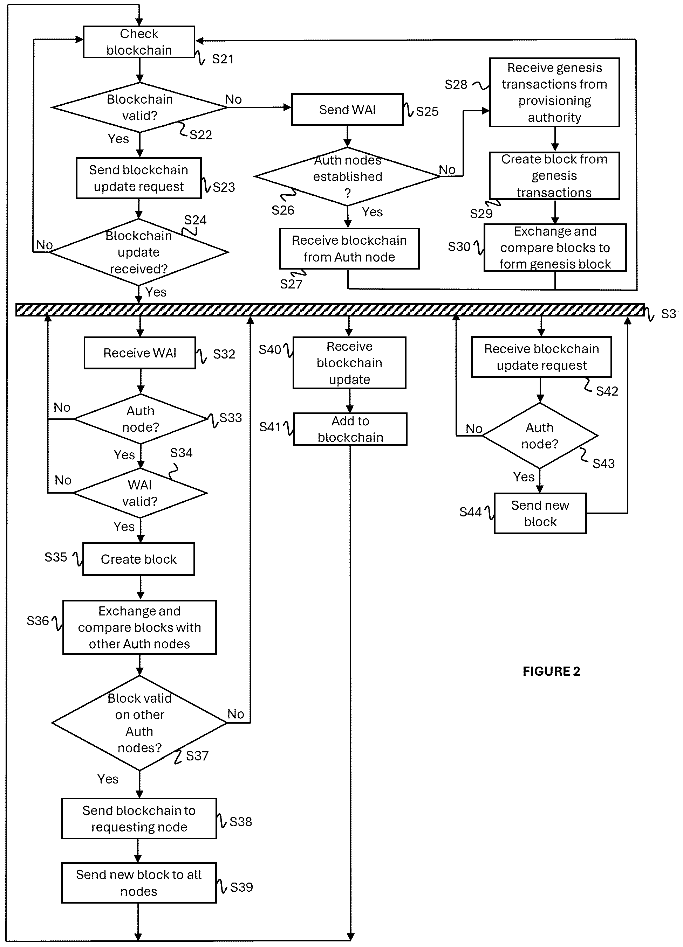

In an initialisation or provisioning process, the provisioning authority 20 provides the identities of the authorisation nodes to the identity management system 10 in a provisioning message. This involves the identities of the authorisation nodes being provided to each ECU in the identity management system 10, but for simplicity, connections from each ECU to the provisioning authority 20 are not illustrated in Figure 1 and are represented instead via the collective connection to the identity management system 10. Further details of the provisioning process are described below with reference to Figure 2.

The provisioning message also comprises the vehicle root, which may comprise manufacturer-assigned identification information, such as a vehicle identification number (VIN), manufacture and engine information, vehicle colour, and other characterising information for the vehicle.

Having received this information from the provisioning authority 20, each ECU determines whether it is identified in the information received from the provisioning authority, and is thus able to determine whether it has been nominated as an authorisation node. This is achieved by an ECU searching for its own identity within the information received from the provisioning authority. Additionally, by identifying other ECUs which are also identified in the provisioning message, the authorisation nodes are able to determine which other ECUs are also authorisation nodes, and which ECUs are non-authorisation nodes.

Each authorisation node 12a-c assumes the role of generating a block for the blockchain, to be established as the genesis block of the blockchain for the identity management system 10. In order to establish a valid blockchain, each authorisation node must generate the same block as each other authorisation node, such that each authorisation node can trust each other as operating in a manner expected of an authorisation node receiving the provisioning message. The generated block comprises identification information for each authorisation node, and a cryptographic hash, and trust may be established between two authorisation nodes if the cryptographic hashes of their respective blocks are the same and the blocks are thus verified. The blockchain as a whole is only validated if each and every block is verified.

Trust between two authorisation nodes corresponds to the establishment of a secure communication channel between the two authorisation nodes, which is an end-to-end communication channel which does not permit communication with any other network node. Such channels may be referred to as 'direct', without any device existing between the two authorisation nodes, although passive components such as switches may be arranged in such a channel. In this manner, it is ensured that there is no interference from communications between other nodes. In embodiments, the secure communication channels are established using Media Access Control Security (MACsec) protocol, which ensures integrity of the connection. Confidentiality of information on the secure communication channel may be ensured by the use of Internet Protocol Security (IPsec). These protocols are simply examples, and generally, any protocol may be used which provides the required integrity, authority, authenticity and confidentiality.

If the blockchain is validated, secure channels between each pair of authorisation nodes are established. An authorisation council 14 is established via the network of secure communication channels, such that by communicating with any authorisation node of the authorisation council 14, an ECU can communicate with any other authorisation node of the authorisation council 14, even without a direct connection to that other authorisation node. For example, ECU 16b can connect to Auth_2 12b, and can connect to Auth_1 12a or Auth_3 12c via the connections to Auth_2 12b by the members 12a, 12c of the authorisation council 14. ECU 16b can therefore be considered to have connected to the authorisation council 14 as a whole, represented by the corresponding arrow to ring 14 in Figure 1.

The communication between non-authorisation nodes 16a-c and the authorisation council 14 need not have secure communication, since the data-associated encryption of the blockchain provides the necessary level of security. However, secure communication can be implemented in embodiments. It is to be noted that there may also be other communication between nodes via the same channels, that is not associated with identity management functionality, but is associated with other functionality of the network requiring secure communication.
In the present disclosure, analogy may be made with a blockchain which typically represents a sequence of transactions, such as financial transactions, between entities, in the sense that the blockchain builds up an immutable 'transaction' history. In the present embodiments, network identification information is analogously referred to herein as a 'transaction' of a blockchain, such that the blockchain builds up an immutable network configuration history. The identification of the authorisation nodes in the provisioning message is referred to herein as a set of genesis transactions, to be included within the genesis block generated by each authorisation node.

Figure 2 shows methods of establishing and maintaining an identity management system according to embodiments of the present disclosure. The methods are performed by each of the plurality of ECUs of the identity management system 10 in parallel, based on execution of a series of computer-readable instructions.

At step S21, an ECU checks a storage means associated with the ECU for a blockchain. In step S22, it is determined whether a valid blockchain is stored. If a valid blockchain is stored, the method proceed via Step S22-Yes to step S23, in which the ECU requests an update of the blockchain from other nodes in the network. At step S24 it is determined whether the blockchain update is received, and if it is, the method proceeds vis S24-Yes to step S31 which is a reference state of the network in which the network waits for further ECU activity to be described below.

The sequence of events described above is performed by each ECU periodically, in order for the blockchain to be maintained. A blockchain update can be provided to an ECU if it is already determined to store a valid blockchain - in other words, the blockchain is neither missing, nor corrupt. If the blockchain is not valid, step S22 proceeds via step S22-No towards step S25 where the ECU transmits broadcasts a request, referred to herein as a 'who am I' (WAI) message, requesting an initial vehicle identity transaction so that it can join the network. In embodiments, the absence of a valid blockchain my occur because the ECU is a spare part that has recently been installed, or because the ECU has been substituted for a third party product which is not permitted to join the network.

The WAI message is broadcast over the network, and comprises identification information from the requesting ECU, on the basis of which a determination can be made as to whether or not to admit the requesting ECU to the distributed ledger. The identification information may comprise one or more of the following: an identification number, a serial number, a network address, a digital product passport, a software version, an authentication certificate, a token, and a public key.

In dependence on whether the authorisation nodes have already been established on the network, either the authorisation nodes or the provisioning authority 20 react to the WAI message broadcast by the ECU. If the authorisation nodes have been established (step S26-Yes), the ECU receives the blockchain from the authorisation node. The ECU thus stores a valid copy of the blockchain, and joins the network, and the method returns to step S21.

A network condition in which the authorisation nodes have not been established may correspond to an initialisation state at a time at which the system which hosts the identity management system 10, such as a vehicle, is manufactured by the original equipment manufacturer (OEM). If the authorisation nodes have not been established, the method proceeds via S26-No to step S28 at which genesis transactions are received from the provisioning authority 20. Specifically, an ECU which is designated as an authorisation node by the provisioning authority 20 receives the genesis transactions at step S28 in a provisioning message, which comprises identification information for each of the authorisation nodes as well as network and blockchain configuration information. In the context of a vehicle, the provisioning message includes vehicle-specific information such as the VIN, as described above.

In embodiments, the provisioning authority 20 transmits the genesis transactions in a unicast peer-to-peer message only to each authorisation node, in order to prevent against threats from third parties in the OEM environment.

The genesis transactions are sent by the provisioning authority 20 once the provisioning authority 20 has already received confirmation from each of the designated authorisation nodes that the node is present on the network. At this stage, the authorisation nodes are not yet aware of their status as authorisation nodes, but the provisioning authority 20 receives broadcast WAI messages from the authorisation nodes, from which the provisioning authority 20 is able to determine that an ECU is ready to identify as an authorisation node via receipt of the genesis transactions.

At step S29, each authorisation node of the network creates a block from the genesis transactions, encrypted with a respective public key available to that ECU.

At step S30, each authorisation node sends the block which it has created to each other authorisation node, to compare the generated block. The comparison is performed by each authorisation node in parallel so that all combinations of pairs of blocks are compared. The comparison results are shared amongst each of the authorisation nodes. If the blocks are equal, it is determined that each authorisation node has correctly decrypted, with its own private key, the provisioning message which is encrypted with a public key by the provisioning authority 20, and has encrypted the generated block in response with the same public key. If all of the generated blocks are equal, a genesis block is established for the basis of the blockchain from the generated block. The method proceeds to step S21 where an ECU checks the blockchain as described above.

Further, secure end-to-end connections are established between each pair of ECUs determined to be authorisation nodes. As such, the authorisation council 14 is established, in which a group of authorisation nodes assume the role of maintaining the blockchain by verifying configuration changes to the network.

If the genesis block cannot be established in step S30 due to the blocks generated in step S29 not being equal, the method returns to step S21. The absence of a blockchain causes behavioural feedback of the network in which an ECU will remain unable to identify a valid blockchain at step S22, and will issue another WAI message via step S22-N and step S25 as a result.

If the ECU initiating a blockchain check in step S21 is not an authorisation node, it does not receive genesis transactions in step S28, and the process returns to step S21.

In the context of a vehicle, changes to the network of ECUs may occur during the vehicle's lifecycle due to component damage caused by environmental conditions such as water or extreme temperature, vehicle impacts or mechanical vibrations caused by driving off-road or on uneven surfaces, and so on. Additionally, system changes may be deliberate, such as those induced as a result of vehicle repairs or services, in which components are replaced, added or removed, or upgraded. A consequence of such a change is that a situation can arise in which an ECU does not store a valid copy of the blockchain. In such circumstances, an ECU may request to join the distributed ledger. An example of such an ECU is shown in Figure 1 as a 'requesting ECU' 18, which makes a request to the authorisation council 14, as shown by the dashed line. The requesting ECU 18 does not know which nodes form part of the authorisation council 14, however, and broadcasts a WAI message.

The request comprises identification information from the requesting ECU 18, on the basis of which the authorisation council 14 is able to confirm whether or not to admit the requesting ECU 18 to the distributed ledger. The identification information may comprise one or more of the following: an identification number, a serial number, a network address, a digital product passport, a software version, an authentication certificate, a token, and a public key. The broadcast request is received by each ECU in step S32. This differs from the operation described above in relation to step S25 at which it must be determined whether or not the authorisation nodes have been established. In step S32, the authorisation nodes have been established, and each ECU receiving the WAI message determines, in step S33, whether it is in fact an authorisation node. If it is not an authorisation node, the method returns via step S33-No to reference state S31, as the receiving ECU is not authorised to take any further action. If it is an authorisation node, however, the receiving ECU progresses in step S33-Yes to step S34.

In step S34, the receiving authorisation node determines whether the WAI message is valid. If the WAI message is not valid, because the identification information of the requesting ECU is not recognised (for example, the requesting ECU is of an incorrect type, has an incompatible software version, or fails some other condition required to be permitted to join the network), the method returns to the reference state S31 via S34-No. Further, if the WAI message is received from an established, available node, it may be determined that the WAI message has been sent maliciously by an entity interfering with the established available node, since the WAI message would not be expected. Step S34 thus involves checking the format and plausibility of the WAI message as a precondition of proceeding further.

If authorisation for the requesting ECU 18 is denied by the authorisation node, the requesting ECU 18 is denied access to the network until such time as it can provide a valid WAI message.

If the WAI message is valid in step S34, each authorisation node creates a new block for the blockchain in step S35, containing the identification information for the requesting ECU 18. The blocks generated by each authorisation node are exchanged and are compared at step S36, in a similar manner to the process occurring during establishment of the genesis block in step S30. If the generated blocks are valid the method proceeds via step S37-Yes to step S38 at which the current state of the blockchain is sent to the requesting ECU 18. Step S38 thus ensures that all ECUs have the same current state, and are thus prepared to receive a newly block containing the identification information of the requesting ECU 18. Then, the new block is sent to all ECUs in step S39, and the method returns to step S21, where the ECUs, including the newly validated requesting ECU 18, maintain the blockchain as described above.

Step S40 represents a process performed by a node such as ECU 16c of Figure 1, which is part of the network but is previously unaware of the provisioning of requesting ECU 18 following steps S32-S39. In step S40, ECU 16 receives blockchain updates indicating a change in configuration of the network, such as the addition of requesting ECU 18. The blockchain updates may correspond to those generated by the authorisation council in step S39. At step S41, the node incorporates the blockchain update into its locally stored blockchain.

Step S40 contrasts with the blockchain update such as that of step S24, triggered following step S21, in which it is checked whether a valid blockchain is stored. Step S40 does not require checking of a valid copy of the blockchain, as the ECU 16c is already part of the network. In contrast, an ECU which was powered-down when a previous blockchain update was transmitted, for example, will obtain blockchain updates only after first checking whether it stores a valid copy of the blockchain on power-up, and requesting an update in step S23.

In embodiments, a node may receive a blockchain update directly from an authorisation node. In other embodiments, a more structured approach is taken in which, for example, authorisation nodes which are gateways transmit the blockchain only to each ECU served by that gateway, leaving other authorisation nodes to send the blockchain to other ECUs. Each of these alternative implementations is considered to be a representation of the sense in which communications to and from the authorisation council 14 as a whole are referenced in the present disclosure.

Step S42 shows a step in which a node receives a blockchain update request from another node. In Step S43, if the node receiving the update request is an authorisation node, (S34-Yes), a new block is sent in step S44 and the method returns to reference state S31. If the node receiving the update request is not an authorisation node (S34-No), the node is authorised to provide an update and the method returns to reference state S31.

In the context of a vehicle, the method of Figure 2 is such that the vehicle's identity is authorised only once by the original equipment manufacturer via step S28. Subsequent changes are only authorised locally within the identity management system 10, and although some changes may be fed back to a central authority on a periodic or ad-hoc basis, such as an external server for performing diagnostic operations, such diagnostic operations do not need to be performed in a timeframe which affects whether or not authorisation of further network configuration changes can take place. Traffic between the vehicle and a central authority is therefore limited, and other ECU identities can be added 'on the fly' without immediate communication to such a central authority. In contrast, a conventional system typically maintains a central database of vehicle configuration changes, and identity management can only be performed by referencing this central database throughout the product's lifecycle.

If the requesting ECU 18 is determined not to be part of the network of ECUs, which may occur if the requesting ECU 18 is a newly installed ECU and messages from the provisioning authority 20 are restricted only to the original manufacturing stage, a challenge-response protocol may be used in order for the authorisation council 14 to determine the credentials of the requesting ECU 18. For example, a token received from the requesting ECU 18 may be compared with the public key used to encrypt blocks of the blockchain by the identity management system 10, and if the requesting ECU 18 is determined to be in possession of the same key, it is permitted to join the network. Any suitable challenge-response protocol may be employed. As described above, the authorisation council 14 approves the admission of the requesting ECU by performing a majority vote.

On admission to the distributed ledger on successful completion of the challenge-response process, the authorisation council 14 provides the complete blockchain to the requesting ECU 18, and generates a new block for the blockchain which comprises identification information for the requesting ECU 18, the status of the requesting ECU 18 having been upgraded from 'requesting' to 'network node' in the manner of all of the other ECUs of the identity management system 10. 'Network node' is further resolved as `authorisation node' or `non-authorisation node'. The new block of the blockchain is transmitted to each ECU of the identity management system 10 by the authorisation council 14. By adding an authorisation node in this manner, maintenance of the blockchain can be preserved without the need to retrain the network for this purpose.

The blockchain which is maintained on the distributed ledger provides an up-to-date and detailed report of the configuration status of the network, and its configuration history. The blockchain can be provided by any ECU, periodically or on-demand, to a remote system for processing the information, such as for building up statistics or diagnostic information to identify errors, identifying areas where software or firmware upgrades are required, and so on, which might be based on either the current identification information, the configuration history, or a combination of both. A full node will be able to provide more detailed history than a light node.

It is also possible to extract the identity/status of the system at a certain point in time in the past using timestamps, enabling forensic checks as well as documenting the identity alteration over time.

An example of where the use of such information is useful is in the context of a fleet management system, where fleets of vehicles are managed and there is a need to assess the configuration of each vehicle in the fleet in order to ensure that the fleet as a whole is optimally configured. Where the fleet of vehicles comprises rental vehicles, the information is an immutable record of whether a user has made a change to the vehicle during the rental contract, which might otherwise be undetected by the rental company.

Additionally, the network status and/or configuration history can be used by the ECUs themselves, so that the identity management system 10 is self-regulating. If a vehicle already contains a camera, for example, or a predetermined number of camera systems with corresponding camera control ECUs, an attempt to add an additional camera control ECU to the network can be denied as the additional camera control ECU is not required.

The skilled person will therefore appreciate that there are a number of potential contexts within which particular operations may be performed which depend on identification information and configuration history information. The distributed ledger implementation enables such operations to be taken reliably and quickly, based on a complete picture of the network's configuration, without the need to defer to the authorisation of a central administrator to approve network configuration changes, and with significant reduction in the risks associated with fraudulent activity that could compromise such a central administrator.

In addition to the role of the authorisation council 14 in maintaining the blockchain, and approving network configuration changes as described above, remote attestation (RA) may be applied to the identity management system 10 in order to verify the integrity and authenticity of the current network identification information. RA may be performed periodically by a system, such as a remote server, during the lifetime of the system which hosts the identity management system 10. For example, RA enables verification of the ownership, by ECUs of the identity management system 10, of a private encryption key that can decrypt a request from the RA issuer encrypted with a corresponding public key - in this manner, it can be verified that the identity management system is operating in a trusted environment, and that fraudulent activity has not taken place. The RA protocol is thus a defined challenge/response protocol, and any appropriate protocol may be employed by the remote server. Such protocols are, in general terms, well understood by those skilled in the art and so specific details are omitted here in the interests of conciseness.

If fraudulent activity is detected, a notification system may be triggered, which enables a rapid alert to be generated identifying a user that malicious activity is believed to have occurred. Such malicious activity may, for example, include an attempt to replace the private key of an ECU with a key owned by a fraudulent entity.

Additionally, or alternatively, a specific ECU may be disabled or deactivated or restarted if RA fails. In embodiments, if it is detected that the node is compromised, the node may neither be addressed as a communication target, nor its transmitted messages interpreted by other nodes, referred to herein as implicit revocation. This simplifies the later re-integration of the specific ECU if the circumstances leading to the implicit revocation are no longer applicable (for example, software or firmware on an ECU is upgraded so that the ECU is using an up-to-date encryption protocol, rather than an out-of-date protocol that has triggered the RA failure). In another example, if a user's subscription to a particular service changes, such as a subscription to traffic alerts, a traffic information ECU can be implicitly revoked until such time as the subscription becomes active. Such implicit revocation avoids the need for a dedicated revocation list, or maintenance of revocation entries in the blockchain.

In embodiments, the attestation is performed by each and every ECU for each and every other ECU, without a remote attestation server. The attestation is thus local, with respect to a vehicle, for example, without requiring connection to a back-end server. Int this way, an ECU can attest every other ECU, including itself, for compliance of the public key from the blockchain and its own secure stored private key.

As described above, the identity management system 10 of embodiments of the present disclosure can be used in a variety of contexts in which a network of electronic control units is present which can support storage of system identification information across a distributed ledger, managed using a private consensus protocol implemented by an authorisation council. Automotive systems provide one example of the use of the identity management system, and in conjunction with the automotive control software updates, the embodiments support the provisions of United Nations Economic Commission for Europe (UNECE) Regulation 156. Other examples include more generic information technology systems for data storage and management. The decentralised key infrastructure enables authentication of the identity of the network and its authorisation nodes, without the need for an ongoing connection to a back-end or remote control system, and provides a trusted execution environment for different types of products and services which depend on the network identity.

## Claims

1. An identity management system, comprising:
a network of a plurality of electronic control units, ECUs, wherein each ECU is a node of a distributed ledger for sharing identification information;
wherein each of the ECUs is configured to store a sequence of records defining network identification information, in which a genesis record of the sequence comprises the network identity, and each record subsequent to the genesis record defines a change to a configuration of the network recorded by the network, and a link to the previous record in the sequence,
wherein the identity management system is arranged to obtain the identity and a configuration history of the network from the latest record in the sequence held by any one of the plurality of ECUs of the distributed ledger and to perform one or more operations in accordance with the obtained network identity and/or configuration history.

2. The identity management system of claim 1, wherein each record of the sequence of records is a block of a blockchain, in which each block comprises a cryptographic hash of a previous block in the blockchain.

3. The identity management system of claim 2, wherein a group of the plurality of ECUs is an authorisation council comprising a plurality of authorisation nodes, wherein the authorisation council is configured to:
maintain the blockchain;
validate one or more ECUs; and
authorise network configuration changes,
according to a majority voting scheme amongst the plurality of authorisation nodes.

4. The identity management system of claim 3, wherein the network configuration changes comprise:
adding an ECU to the network;
removing an ECU from the network;
recording a change in functionality of an ECU; and
recording a software or firmware change of an ECU.

5. The identity management system of claim 3 or claim 4, wherein the authorisation nodes comprise ECUs having a functionality greater than a threshold level of functionality.

6. The identity management system of any one of claims 3 to 5, wherein the network is arranged to receive a record of genesis transactions from a provisioning authority,
wherein an ECU is arranged to determine that it is an authorisation node if it is part of the genesis transactions received from the provisioning authority,
wherein each ECU that is determined to be an authorisation node is arranged to create a block of the blockchain, comprising a genesis identity of the network and the genesis transactions received from the provisioning authority;
wherein if respective blocks created by each and every authorisation node are the same, the block is validated as a genesis block and the blockchain is initiated with the genesis block, and a secure channel is established between each pair of authorisation nodes using information from the genesis transactions.

7. The identity management system of claim 6, wherein a requesting ECU is arranged to broadcast a request to join the distributed ledger if it does not store a valid block of the blockchain, wherein the request comprises identification information for the requesting ECU, wherein:
if the authorisation council validates the requesting ECU, the requesting ECU is arranged to receive the blockchain from the authorisation council, and the authorisation council is arranged to update the blockchain with a block comprising a transaction representing a network configuration change comprising the addition of the identification information of the requesting ECU, across the distributed ledger.

8. The identity management system of claim 7, wherein the request comprises one or more of:
an identification number,
a serial number,
a network address,
a digital product passport,
a software version,
an authentication certificate,
a token, and
a public key.

9. The identity management system of any one of the preceding claims, wherein the one or more operations comprise managing access to one or more services in dependence upon network identity and/or configuration history.

10. The identity management system of any one of claims 1 to 8, wherein the one or more operations comprise one or more of:
disabling or requesting a reboot of one or more ECUs; and
triggering a notification.

11. The identity management system of any one of claims 1 to 8, wherein the one or more operations comprise remote attestation from each ECU to each other ECU, and disabling or requesting a reboot of an ECU, or triggering a notification if the remote attestation fails.

12. The identity management system of any one of claims 1 to 8, wherein the network comprises ECUs of a vehicle control system, and the network information comprises vehicle identity information, wherein the one or more operations include:
managing access to a service in accordance with a subscription associated with the vehicle identity information;
disabling one or more ECUs in accordance with a subscription associated with the vehicle identity information, or a software or firmware version; and
sharing vehicle identity information and/or configuration information with an external entity.

13. A method of managing identification information, comprising an electronic control unit, ECU, performing the steps of:
receiving a record of genesis transactions from a provisioning authority,
acquiring authorisation node status in a network of ECUs if the ECU is part of the genesis transactions received from the provisioning authority,
responsive to the ECU determining that it is an authorisation node, creating a block of the blockchain, comprising a genesis identity of the network and the genesis transactions received from the provisioning authority;
responsive to the ECU determining that the block and each respective block created by each and every other authorisation node in the network of ECUs are the same, storing a blockchain initiated with the block as a genesis block, and establishing a respective secure channel with each of the other authorisation nodes using the genesis transactions;
wherein the ECU is comprised within a distributed ledger storing network identification information and configuration history information for use in one or more operations by an identification management system.

14. A computer program which, when executed by the ECU, is arranged to perform the method of claim 13.
